## Europäisches Patentamt

## European Patent Office

## Office européen des brevets

(19)

(11) Veröffentlichungsnummer: **0 045 093**
A2

(12) **EUROPÄISCHE PATENTANMELDUNG**

(21) Anmeldenummer: **81106006.0**

(22) Anmeldetag: **30.07.81**

(51) Int. Cl.³: **B 23 K 9/12**, B 65 H 51/30

(30) Priorität: **30.07.80 BG 48661/80**

(43) Veröffentlichungstag der Anmeldung: **03.02.82**
**Patentblatt 82/5**

(84) Benannte Vertragsstaaten: **AT BE CH DE FR GB IT LI NL SE**

(71) Anmelder: **INSTITUT PO TECHNITSCHESKA KIBERNETIKA I ROBOTIKA, Akademik Bontschev-Strasse, Block 12, Sofia (BG)**

(72) Erfinder: **Ivanov, Ivan Iliev, Metschka-Strasse Bl.40-4, Sofia (BG)**
Erfinder: **Angelov, Angel Simeonov, Dipl.-Ing., Boul.Skobelev 26, Sofia (BG)**
Erfinder: **Bogdanov, Todor Damjanov, Dipl.-Ing., Buntovnik-Strasse, Bl.64-2, Sofia (BG)**
Erfinder: **Ivanov, Dimiter Alexandrov, Dipl.-Ing., D.Belischki-Strasse Block, 4, Sofia (BG)**

(74) Vertreter: **Finck, Dieter et al, Patentanwälte Schiff, v. Füner, Strehl Schübel-Hopf, Ebbinghaus, Finck Mariahilfplatz 2 & 3, D-8000 München 90 (DE)**

(54) **Drahtvorschubgerät.**

(57) Das Drahtvorschubgerät hat in Schraubenlinien um den zugeführten Draht planetar umlaufende Vorschubrollen und ein Trag- und Führungsfunktionen erfüllendes Gehäuse in Form eines Hohlkörpers, der quer und symmetrisch zur Drahtachse angeordnet ist und von gleichförmigen beweglichen Elementen umfasst ist, die symmetrisch und axialbeweglich zum Hohlkörper angebracht sind. In jedem beweglichen Element ist die Achse einer Vorschubrolle befestigt, wobei im Hohlkörper verlängerte Führungsaussparungen für die Achsen vorgesehen sind. Die Masse jedes beweglichen Elements kann auf einer oder auf beiden Seiten der Drahtachse verteilt sein. Das Drahtvorschubgerät hat kraftübertragende als Ansätze oder Führungsflächen ausgebildete Glieder, die exzentrisch oder schräg zur Drahtachse angeordnet sind, sowie darüber laufende Rollkörper. Weiter weist das Gerät Vorrichtungen zum regelbaren Anpressen der Vorschubrollen an den Draht auf, die aus Federelementen und axial, tangential oder radial wirkenden Magneten bestehen.

EP 0 045 093 A2

-1-

## Drahtvorschubgerät

Die Erfindung bezieht sich auf ein Drahtvorschubgerät, vorzugsweise für den Drahtvorschub beim elektrischen Lichtbogenschweißen in Schutzgasatmosphäre.

Es ist bereits ein Planeten-Drahtvorschubgerät bekannt (DE-OS 28 25 537), bei dem der Drahtvorschub durch frei um die Achsen drehbare, schräg und symmetrisch zur Drahtachse angeordnete Vorschubrollen erfolgt, die den Draht in Schraubenlinien planetar umlaufen. Die Achsen der Vorschubrollen sind in Kolben befestigt, die mit den kurzen Armen von bogenförmigen Doppelarmhebeln und mit einer in Form einer archimedischen Spirale gekrümmten, mit der Außenseite an einen Nocken drückenden Feder in Eingriff stehen.
Ein wesentlicher Nachteil des Gerätes besteht darin, daß eine schnelle und gleichmäßige Einstellung bei der Arbeit mit Drähten, die verschiedene Härte aufweisen, nicht möglich ist, da die Umstellung ein einseitiges Festklemmen der Kraftfeder in verschiedenen Rastöffnungen oder einen Austausch der Feder selbst erfordert.

Ein weiterer Nachteil ist, daß das Auseinandertreiben der Vorschubrollen entsprechend den normgemäß zulässigen Abweichungen der geometrischen Parameter der Schweiss- drähte, wie Durchmesserdifferenzen, Querschnittsabwei- chung von der geometrischen Form, Oberflächenrauhigkeit u.a., schwierig ist.

Bekannt sind weiterhin Drahtvorschubgeräte (DD-PS 140 116, US-PS 4 172 645), bei denen der Anpreßdruck der Rollen an den Draht durch Vorrichtungen erfolgt, die Rollenachsenträger mit schräg zur Drahtachse verlaufenden Führungsflächen aufweisen und mittels kraftübertragender Glieder von Schneckengetrieben mit Drahtrichtführungen angetrieben sind.

Der wesentlichste Nachteil dieser Konstruktionen besteht darin, daß keine direkte elastische Verbindung zwischen den Drahtvorschubrollen und den den Anpreßdruck ausübenden Vorrichtungen möglich ist.

Die Nachteile der erwähnten Planeten-Drahtvorschubvorrichtungen lassen sich dahingehend zusammenfassen, daß eine Exzentrizität zwischen den Halte- und Führungselementen vorhanden ist, die einerseits die Rollenachsen und die Anpreßdruckelemente der Rollen an den Draht und andererseits die Rollen selbst tragen, wobei schädliche Seitenkräfte und eine große mechanische Hysteresis auftreten und die Zentrifugalkräfte diese hemmenden Belastungen noch steigern, und daß solche Vorschubgeräte nur sehr schwer oder überhaupt nicht den Ungleichmäßigkeiten des Drahtes im Querschnitt und in der Länge folgen.

Der Erfindung liegt die Aufgabe zugrunde, ein Drahtvorschubgerät mit einer einfachen, leichten Konstruktion zu schaffen, die aus verhältnismäßig wenigen Teilen besteht und außerdem bei guter Auswuchtung einen direkt regulierbaren Anpreßdruck an den Draht, eine direkte elastische Verbindung zwischen den Trag- und Führungselementen und Drahtvorschubrollen, sowie eine schnellreagierende, aber gleichmäßige Anpassung der Rollen, abhängig von den Eigenschaften und Abmessungen des zugeführten Drahtes, aufweist.

Diese Aufgabe wird, ausgehend von einem Drahtvorschubgerät mit frei um ihre Achsen drehbaren, schräg und symmetrisch zur Drahtachse angeordneten Vorschubrollen, die den Draht in Schraubenlinien planetar umlaufen, wobei die Rollenachsen in Trag- und Führungselementen befestigt sind, mit kraftübertragenden Elementen, mit Vorrichtungen zum Regeln der Anpreßkraft der Rollen an den Draht und mit Drahtführungen, erfindungsgemäß dadurch gelöst, daß die Trag- und Führungselemente als Gehäuse in Form eines Hohlkörpers ausgebildet sind, das quer und symmetrisch zu den Berührungspunkten jeder einzelnen Vorschubrolle am zugeführten Draht angeordnet ist und von beweglichen Elementen umfaßt ist, die eine gegenseitige Symmetrie zur Achse des Drahtes und eine axiale Beweglichkeit in Bezug auf die Fläche des Hohlkörpers aufweisen, wobei die Vorschubrollen mit ihren Achsen in den jeweiligen beweglichen Elementen befestigt sind, die mit den Vorrichtungen zum Regeln des Anpreßdrucks der Vorschubrollen an den Draht durch die kraftübertragenden Elemente in Verbindung gesetzt sind.

Im Hohlkörper sind Führungsaussparungen zum Durchgang der Rollenachsen vorgesehen. Es sind wenigstens zwei Führungsaussparungen vorhanden, die in Richtung der Hohlkörperachse etwas verlängert sind.

Die beweglichen Elemente sind nach Form und Masse gleich und weisen axiale Einschnitte und Klauen auf, die in Bezug auf ihre Ineinanderverschiebung ausgebildet sind, wobei die Masse jeder Klaue beidseitig räumlich bezogen auf die Achse des Drahtes verteilt ist.

Die kraftübertragenden Elemente sind auf den ineinanderverschiebbaren Klauen der beweglichen Elemente als Ansätze ausgebildet.

Jede Vorrichtung für das regelbare Anpressen an den Draht weist ein Federelement auf, das an den Ansatz des einen beweglichen Elements durch eine Einstellmutter, die auf das andere bewegliche Element geschraubt ist, andrückt.

Die Masse jedes der gleichförmigen beweglichen Elemente kann auch einseitig bezüglich der Achse des zugeführten Drahtes angeordnet sein.

Die kraftübertragenden Glieder können als Gabel ausgebildet sein und zur Drahtachse schräge Führungsflächen, Rollkörper und einen Becher aufweisen. Die Vorrichtung zum Regeln des Anpreßdrucks an den Draht weist wenigstens ein Federelement auf, das konzentrisch zur Achse des zugeführten Drahtes angeordnet und durch die kraftübertragenden Glieder kinematisch mit den beweglichen Elementen verbunden ist. Die Vorrichtung zum regelbaren Anpressen an den Draht kann auch mit wenigstens einem axial wirkenden Elektromagneten ausgeführt werden, der durch die kraftübertragenden Glieder kinematisch mit den beweglichen Elementen verbunden ist.

Die kraftübertragenden Glieder können als drehbare Buchse mit zur Drahtachse exzentrischen Führungsflächen und Rollkörpern ausgebildet sein. Die Vorrichtung zum regelbaren Anpressen der Rollen an den Draht kann auch wenigstens einen Elektromagneten mit tangentialem Magnetfeld aufweisen, der durch die kraftübertragenden Glieder kinematisch mit den beweglichen Elementen verbunden ist.

Die kraftübertragenden Glieder und die Vorrichtungen zum regelbaren Anpressen der Rollen an den Draht können eine Einheit in Form eines mehrpoligen Elektromagnetstator sein, wobei die geometrische Achse des Drahtes zum Stator koaxial ist. Als Rundführung des Elektromagnetstators sind bogenförmige Stücke vorgesehen, die bezüglich der beweglichen Elemente starr befestigt sind.

Für die Vorrichtungen zum regelbaren Anpressen der Rollen an den Draht, die mit Elektromagneten versehen sind, ist eine Steuerschaltung, vorzugsweise zum Ein- und Ausschalten des Drahtvorschubs bei weiterlaufendem Motor, vorgesehen. Die Schaltung weist einen Elektromagneten auf, der

- 5 -

0045093

mit dem Ausgang eines Verstärkers verbunden ist, dessen Freigabe-Eingang mit dem Ausgang einer Schaltung zur Folgesteuerung in Verbindung steht. Der Signal-Eingang des Verstärkers ist mit dem Ausgang eines Addierers für Analogsignale verbunden. Der eine Eingang des Addierers für Analogsignale ist mit dem Ausgang einer Schaltung zur Eingabe des Anpreßdrucks verbunden, der zweite Ausgang mit dem Ausgang eines Vorverstärkers, dessen Eingang mit einem in Reihe zu einem Motor und einem Drehzahlregler geschalteten Strom-Spannungs-Wandler verbunden ist. Der Vorverstärker weist eine nichtlineare Kennlinie auf.

Die beschriebenen Ausführungen der Trag- und Führungselemente und der Vorrichtungen zum regelbaren Anpressen der Rollen an den Draht sind nur Ausführungsbeispiele der Erfindung. Diese Elemente sind auch anderweitig kombinierbar.

Das erfindungsgemäße Drahtvorschubgerät hat den Vorteil, daß ein abstützungsfreies Führen der Vorschubrollen über Trag- und Führungselemente ohne seitlich wirkende Reibungskräfte erzielt wird. Die Trag- und Führungselemente weisen eine exzentrizitätsfreie, beidseitig teleskopische Anordnung auf, so daß gleichzeitig ein günstiger unwuchtfreier Ausgleich der Zentrifugalkräfte erreicht wird, wobei die direkte elastische Verbindung einen gleichmäßigeren Drahtvorschub begünstigt. Darüber hinaus weist die vergleichsweise einfache leichte technologische Konstruktion des ganzen Gerätes einige Vorteile hinsichtlich Produktion und Betrieb aufgrund einer leichteren Bedienung, einer erhöhten Zuverlässigkeit und Verschleißfestigkeit sowie aufgrund eines reduzierten Zeit- und Arbeitsaufwandes auf. Bei der Ausführung mit elektromagnetischem Ein- und Ausschalten des Drahtvorschubs ohne Aussetzen des Motors wird die Betriebsweise des Motors erleichtert und seine Lebensdauer verlängert.

Anhand der Zeichnungen wird die Erfindung beispielsweise näher erläutert. Es zeigen:

Fig. 1  ein kinematisches Schema einer ersten Ausführungsform eines erfindungsgemäßen Drahtvorschubgeräts,

Fig. 2  eine Ansicht eines Teils der Trag- und Führungselemente am Hohlkörper,

Fig. 3  die Trag- und Führungselemente, zusammengebaut,
von der Drahtachse her,

Fig. 4  den Schnitt A-A von Fig. 3,

Fig. 5  ein kinematisches Schema einer zweiten Ausführungsform eines erfindungsgemäßen Drahtvorschubgeräts,

Fig. 6  ein kinematisches Schema einer dritten Ausführungsform eines erfindungsgemäßen Drahtvorschubgeräts,

Fig. 7  die Ansicht in Richtung des Pfeils A von Fig. 6,

Fig. 8  ein kinematisches Schema einer vierten Ausführungsform eines erfindungsgemäßen Drahtvorschubgeräts,

Fig. 9  ein kinematisches Schema einer fünften Ausführungsform eines erfindungsgemäßen Drahtvorschubgeräts,

Fig. 10 ein kinematisches Schema einer sechsten Ausführungsform eines erfindungsgemäßen Drahtvorschubgeräts,

Fig. 11 ein kinematisches Schema einer siebten Ausführungsform eines erfindungsgemäßen Drahtvorschubgeräts,

Fig. 12 den Schnitt A-A von Fig. 11,

Fig. 13 ein kinematisches Schema einer achten Ausführungsform eines erfindungsgemäßen Drahtvorschubgeräts,

Fig. 14 ein Blockschaltbild einer Steuerung des Gerätes
von Fig. 9, Fig. 10, Fig. 11 bzw. Fig. 13.

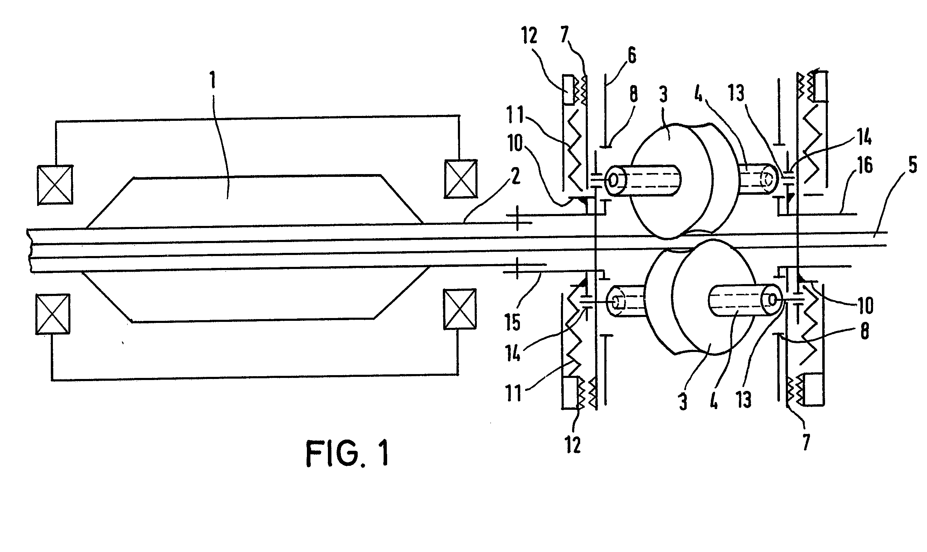

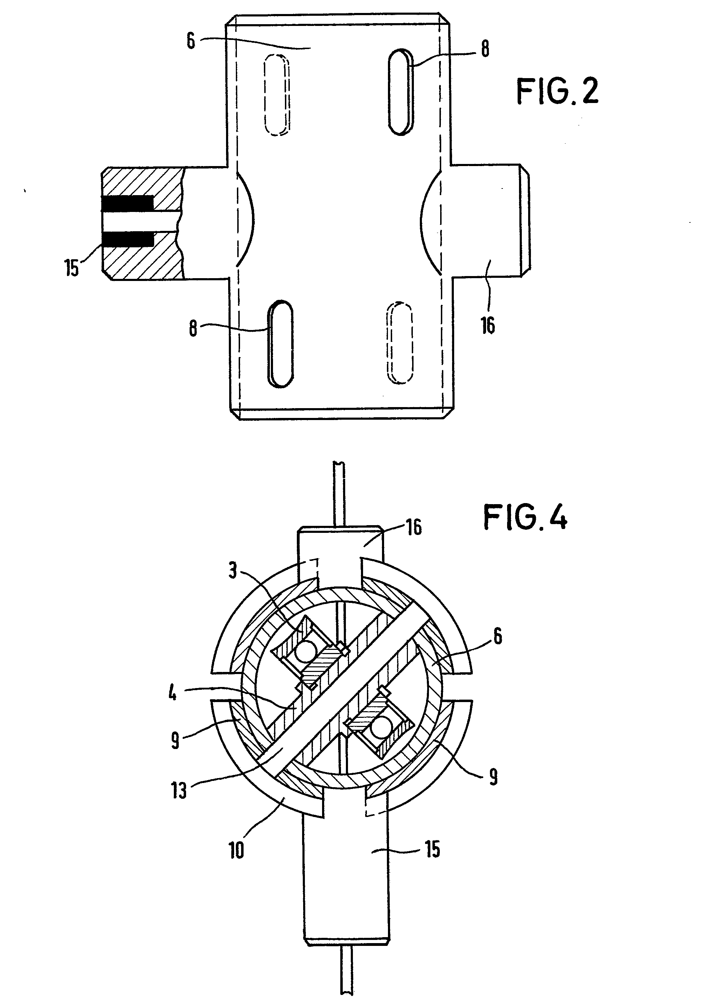

Eine erste Ausführungsform eines erfindungsgemäßen Drahtvorschubgerätes ist in Fig. 1, 2, 3 und 4 gezeigt. Das
Gerät besteht aus einem Motor 1 mit einer Hohlwelle 2, die
mit den Trag- und Führungselementen verbunden ist, welche
mit frei um zylindrische Hohlachsen 4 drehbare Drahtvorschubrollen 3 eine Einheit in Teleskop-Bauweise bilden.

0045093

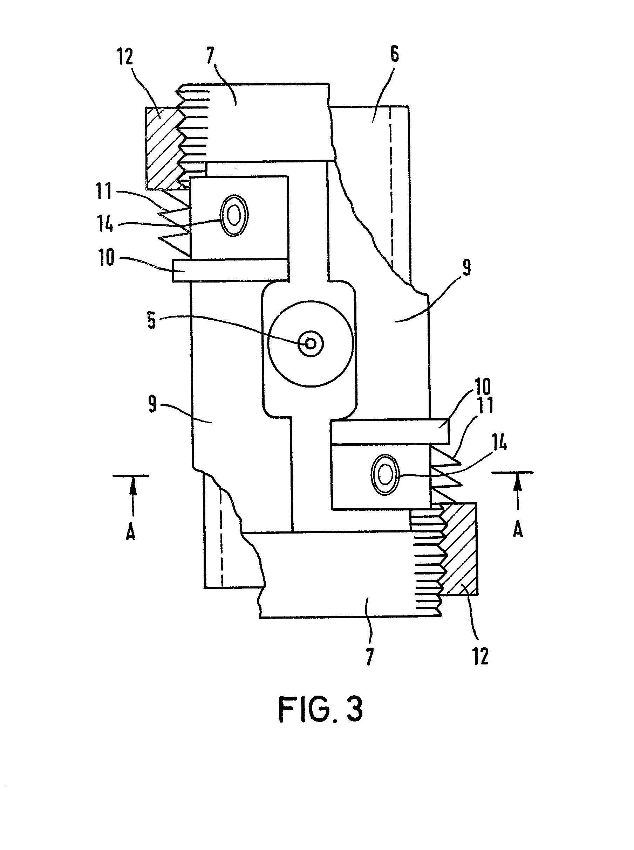

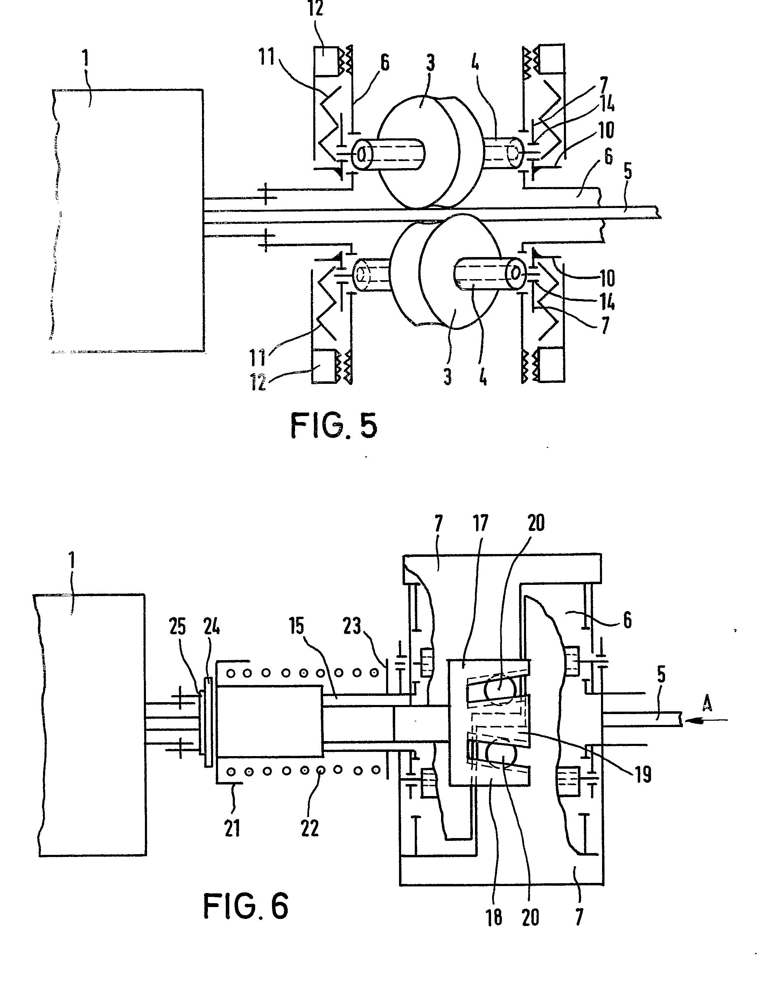

Die Hohlachsen 4 sind schräg unter einem Winkel von 20°
bis 45° symmetrisch zur Achse 5 des Drahtes angeordnet,
der von den Vorschubrollen 3 in Schraubenlinien planetenartig umlaufen wird. Die teleskopisch gebaute Einheit
weist einen zylindrischen Hohlkörper 6 auf, der quer und
symmetrisch zu den Berührungspunkten der Vorschubrollen 3
mit dem Draht angeordnet ist. Die Stirnabsschnitte der
Achsen 4 sind als Teil einer zylindrischen Fläche ausgebildet, die der inneren Fläche des Hohlkörpers 6 entspricht,
was ein Drehen der Achsen 4 um ihre eigenen geometrischen
Achsen ausschließt. Der Hohlkörper 6 ist von beweglichen
Elementen 7 umschlossen, die zu ihm und zur Drahtachse 5
symmetrisch angeordnet sind und zur Fläche des Hohlkörpers
6, in dem die Rollen 3 angebracht sind, axial verschiebbar
sind. Die Achsen 4 sind an den beweglichen Elementen 7 befestigt und mittels kraftübertragender Glieder mit Vorrichtungen zum Regeln des Anpreßdrucks der Rollen 3 an den
Draht 5 verbunden. Auf dem Hohlkörper 6 sind zwei gegenüberliegende koaxiale Führungsaussparungen 8 für die Achsen
4 der Rollen 3 vorgesehen. Die Aussparungen 8 sind in der
Richtung der Achse des Körpers 6 etwas verlängert, wobei
sich ihre geometrischen Symmetrieachsen in einem Winkel
von 40° bis 90° paarweise kreuzen. Die beweglichen Elemente
7 sind nach Form und Masse gleich und weisen axiale Einschnitte und Klauen 9 auf (Fig. 3 und Fig. 4), die für ein
Ineinanderverschieben ausgebildet sind. Die Masse jeder
Klaue 9 ist räumlich beidseitig der Drahtachse verteilt.
Die kraftübertragenden Glieder sind als Ansätze 10 auf
den ineinandergreifenden Klauen 9 der beweglichen Elemente
7 ausgebildet. Jede Vorrichtung zum regelbaren Anpressen
der Rollen 3 an den Draht 5 besteht aus einem Federelement
11, das an den Ansatz 10 des einen beweglichen Elements 7
durch eine Einstellmutter 12 angepreßt ist, die auf dem
anderen beweglichen Element 7 aufgeschraubt ist. Für die
Aufhängung der Drahtvorschubrollen 3 an den beweglichen
Elementen 7 sind in den Hohlachsen volle zylindrische
Stifte 13 montiert, die sich durch koaxial gegenüberliegende zylindrische Bohrungen 14 in den beweglichen Elementen 7 erstrecken. Die geometrischen Achsen der Bohrungen 14 und der beweglichen Elemente 7 stehen senkrecht zueinander und kreuzen sich. Stehen nach der Montage die beweglichen Elemente völlig ineinander, so werden die Bohrungen 14 der entsprechenden Führungsaussparungen 8 des Hohlkörpers 6 einander gegenüber angeordnet. Die Hohlwelle 2 des Motors ist mit dem Hohlkörper 6 durch eine mit Drahtführung 15 versehene Nabe verbunden. An der anderen Seite des Hohlkörpers ist eine zweite, zur ersten symmetrische Nabe mit einer Drahtführung 16 vorgesehen. Nach der Montage der Vorrichtung wird der Draht 5 symmetrisch von den Rollen 3 in einem Winkel von 20° bis 45° umfaßt, wobei sich die Achsen 4 in einem Winkel von 40° bis 90° kreuzen. Dabei ist jede Rolle 3 an ihrem gegenüberliegenden beweglichen Element 7 aufgehängt.

Die in Fig. 5 gezeigte zweite Ausführungsform eines Drahtvorschubgeräts unterscheidet sich von der ersten dadurch, daß die Masse der gleichförmigen beweglichen Elemente 7 einseitig bezüglich der Achse des Drahtes 5 verteilt ist, wobei jede Rolle 3 nicht auf dem gegenüberliegenden, sondern auf dem anliegenden beweglichen Element 7 aufgehängt ist. Darüber hinaus ist das Federelement 11 jeder Vorrichtung zum Regeln des Anpreßdruckes der Rollen 3 an dem Draht durch die Einstellmutter 12 nicht an den Ansatz 10 des gegenüberliegenden, sondern an den des anliegenden beweglichen Elements 7 angepreßt, wobei die Einstellmutter 12, anstatt auf dem jeweiligen beweglichen Element 7, auf dem Hohlkörper 6 aufgeschraubt ist.

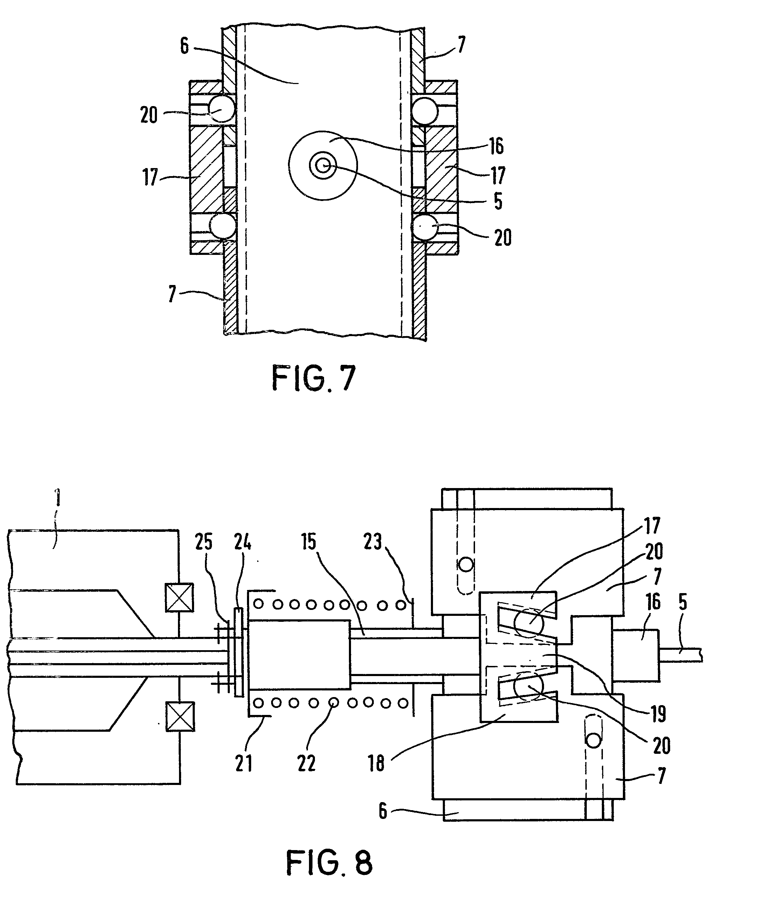

Die in Fig. 6 und 7 gezeigte dritte Ausführungsform des Drahtvorschubgerätes unterscheidet sich von der ersten dadurch, daß jedes bewegliche Element 7 stufenweise ausgebildet ist und für die kinematische Verbindung mit den kraftübertragenden Gliedern mit einem zusätzlichen Paar von Öffnungen auf der mittleren Stufe versehen ist. Diese Glieder bestehen aus einer Gabel 17 mit schräg zur Achse des Drahtes 5 gestellten Führungsflächen, die gerade und ungerade Kegelzähne 18, 19, Rollkörper in Form von Kugeln 20 und einen Becher 21 aufweisen. Die Zahnführungsflächen 18, 19 stehen schräg zum Boden der Gabel 17, wobei ein ungerader Kegelzahn 19 sich zwischen zwei geraden Kegelzähnen 18 befindet. In den zusätzlichen Öffnungen der beweglichen Elemente 7 sitzende Kugeln 20 sind von dem mittleren ungeraden Kegelzahn 19 und den jeweiligen geraden Kegelzähnen 18 umfaßt. Die Vorrichtung zum Regeln des Anpreßdruckes der Rollen an den Draht besteht aus einem Federelement 22, das konzentrisch zur Achse des zugeführten Drahtes 5 angeordnet ist. Das Federelement sitzt im Becher 21 und ist von der Seite des Hohlkörpers 6 her mit einem Sicherungsblech 23 gesichert. Um die Kraft des Federelements einzustellen, ist eine Einstellmutter 24 vorgesehen, die gegen den Becher 21 drückt, auf der Nabe 15 aufgeschraubt ist und gegen ein Ausfallen durch ein Sicherungsblech 25 gesichert ist.

Die in Fig. 8 gezeigte vierte Ausführungsform des Drahtvorschubgerätes unterscheidet sich von der dritten Ausführungsform dadurch, daß die Masse der beweglichen Elemente 7 einseitig bezüglich der Achse des Drahtes 5 verteilt ist, wobei die Aufhängung der Rollen 3 der der zweiten Ausführungsform entspricht. Darüber hinaus weisen die Führungsflächen der Zähne 18, 19 eine Rückwärtsneigung auf, wobei die Mittelzähne 19 gerade Kegel und die Außenzähne 18 im Gegenteil schiefe Kegel sind.

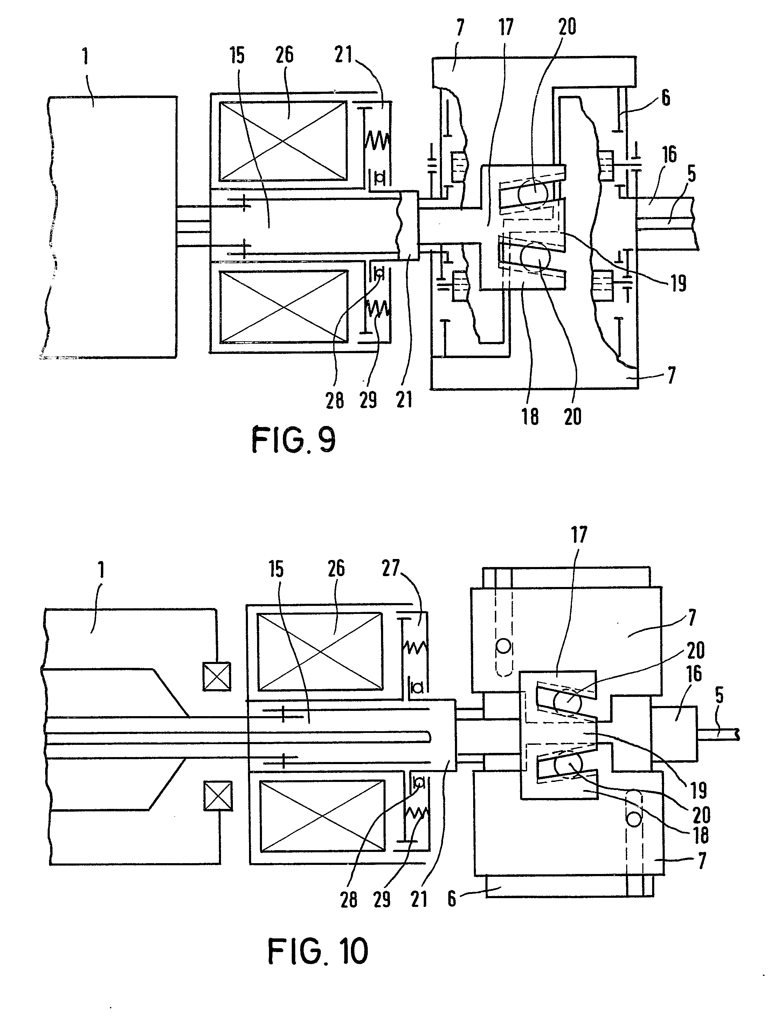

Die in Fig. 9 gezeigte fünfte Ausführungsform des Drahtvorschubgerätes unterscheidet sich von der dritten dadurch, daß die Vorrichtung zum regelbaren Anpressen der Rollen an den Draht einen axial wirkenden Elektromagneten 26 aufweist, der konzentrisch um die motorseitige Nabe angeordnet ist. Darüber hinaus ist der Elektromagnet 26 mit einem Anker 27 versehen, der auf dem Becher 21 mit einem Radial-Axial-Lager 28 gelagert ist, wobei zwischen der inneren Stirnfläche des Bechers 21 und dem Anker 27 ein

0045093

Federelement 29 angebracht ist.

Die in Fig. 10 gezeigte sechste Ausführungsform des Drahtvorschubgeräts unterscheidet sich von der fünften dadurch,
daß die Verteilung der Masse der beweglichen Elemente 7,
das Aufhängen der Rollen 3 und die Neigung der Führungsflächen der Zähne 18, 19 mit der Ausführung nach der vierten
Ausführungsform identisch sind.

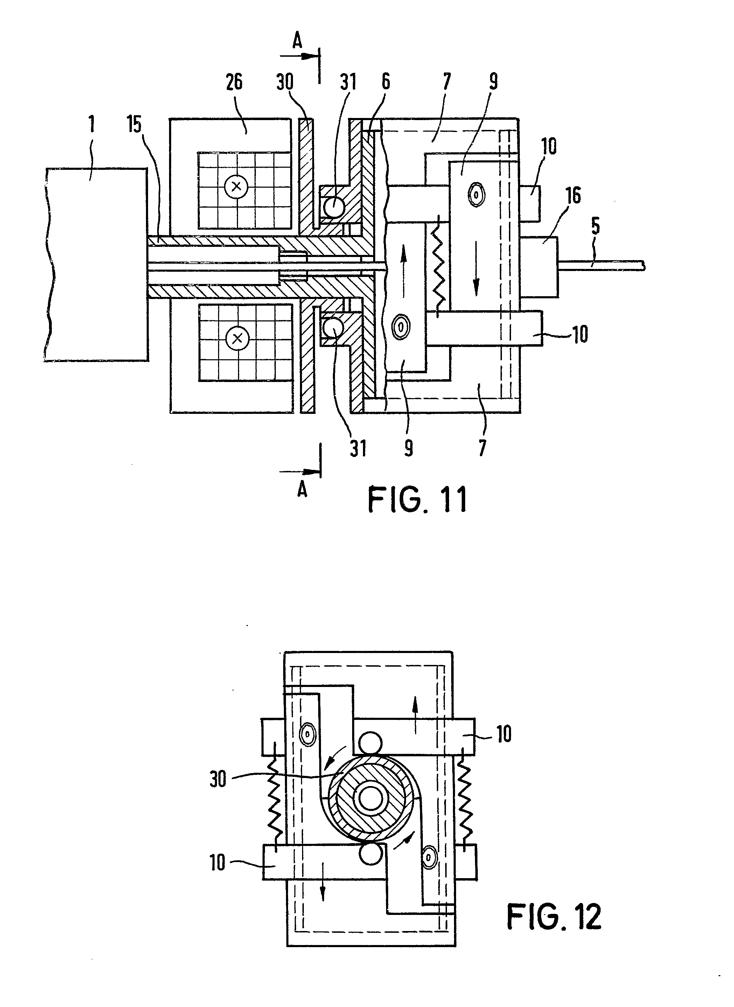

Die in Fig. 11 und 12 gezeigte siebente Ausführungsform des
Drahtvorschubgerätes unterscheidet sich von der fünften
dadurch, daß die Vorrichtung zum regelbaren Anpressen der
Rollen an den Draht mit einem Elektromagneten 26 versehen
ist, der keine Axialwirkung, sondern ein tangentiales Mag
netfeld aufweist. Die kraftübertragenden Glieder haben
keine schrägen Führungsflächen, sondern solche, die exzentrisch um die Achse des Drahtes 5 angeordnet sind und
auf der Buchse 30 ausgebildet sind, die drehbar auf der
Nabe 15 sitzt. Der Elektromagnet 26 steht mit den beweglichen Elementen 7 durch den sich in seinem Magnetfeld befindenden scheibenartigen Teil der Buchse 30 sowie die
Kugeln 31 mit der jeweiligen exzentrischen Fläche der
Buchse 30 in Kontakt. Darüber hinaus sind die Kugeln 31
nicht in Öffnungen der stufenartigen beweglichen Elemente 7
montiert, sondern befinden sich in Sitzen der Ansätze 10,
die zur Buchse 30 radial vorgesehen sind. Im Unterschied
zur ersten Ausführungsform nach Fig. 3 sind diese Ansätze
robuster und vorzugsweise in der Nähe der Basis der beweglichen Elemente 7, d.h. in ihren Mittelstufen, ausgebildet,
wobei die Übergänge zu den Endstufen im Unterschied zur
fünften Ausführungsform den exzentrischen Flächen der
Buchse 30 entsprechend profiliert sind.

Die dritte, vierte, fünfte, sechste und siebente Ausführungsform kann eine Anordnung der kraftübertragenden Glieder seitlich von den Trag- und Führungselementen aufweisen,
was in der Zeichnung nicht gezeigt ist. Die jeweiligen Vorrichtungen zum Regeln des Anpreßdrucks sind dabei konzentrisch um die dem Motor ferner liegende Nabe montiert, wobei die Nabe etwas verlängert und zusätzlich gelagert ist.

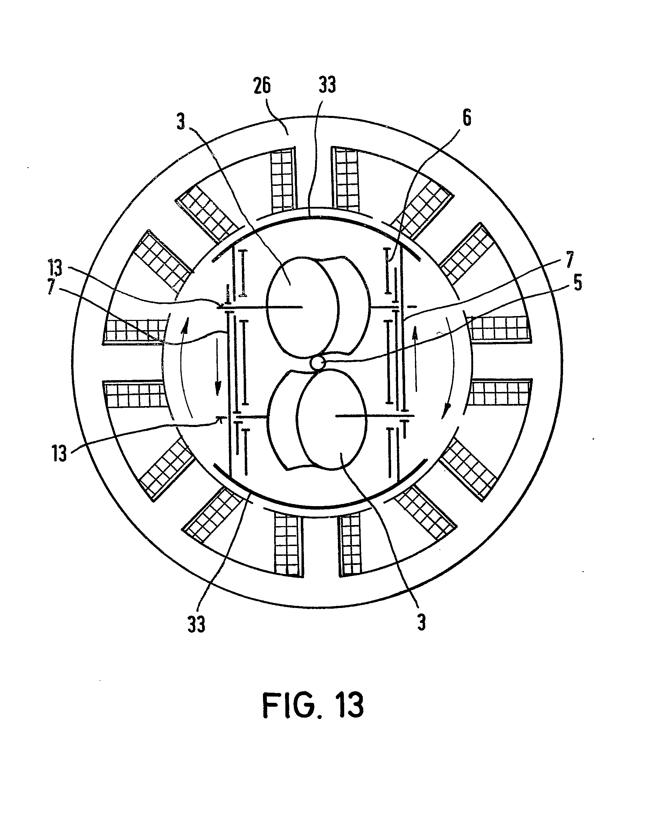

Die in Fig. 13 gezeigte achte Ausführungsform des Drahtvorschubgerätes hat wiederum einen zur Achse des Drahtes 5 koaxialen Elektromagneten 26, der mehrpolig und als Stator ausgeführt ist, wobei an der Basis der beweglichen Elemente 7 starr befestigte bogenförmige Stücke 33 um die Rundführung des Stators angebracht sind.

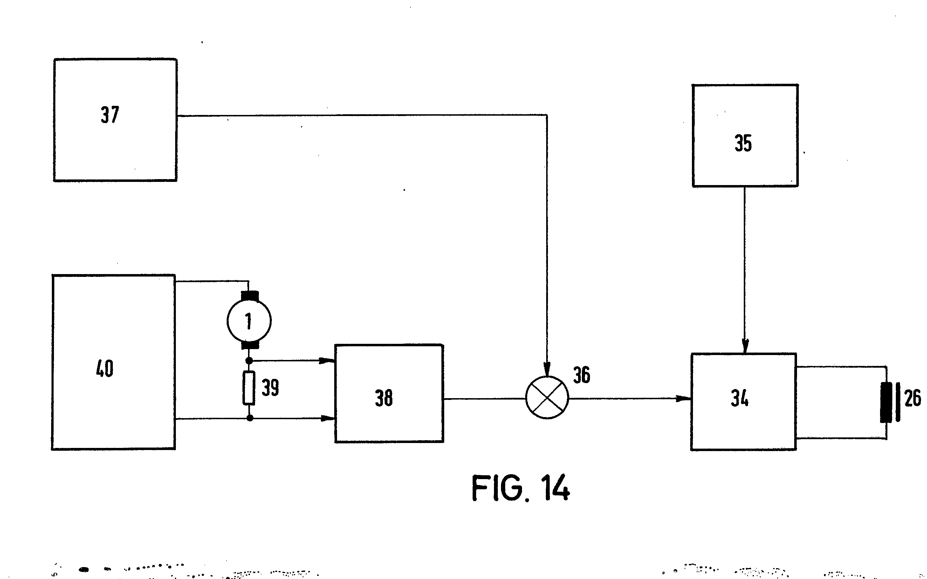

Die in Fig. 14 gezeigte Schaltung weist den Elektromagnet 26 auf, der mit dem Ausgang eines Verstärkers 34 verbunden ist, dessen Freigabe-Eingang mit dem Ausgang einer Schaltung 35 zur Folgesteuerung in Verbindung steht, und dessen Signal-Eingang mit dem Ausgang eines Addierers 36 für Analogsignale verbunden ist. Ein erster Eingang des Addierers 36 ist mit dem Ausgang einer Schaltung 37 zur Eingabe der Anpreßkraft verbunden, ein zweiter Ausgang mit dem Ausgang eines Vorverstärkers 38. Der Eingang des Vorverstärkers 38 ist mit einem in Reihe zu dem Motor 1 und einem Drehzahlregler 40 geschalteten Strom-Spannungs-Wandler 39 verbunden. Der Vorverstärker 38 hat eine nichtlineare Kennlinie.

Bei der ersten Ausführungsform (Fig. 1, Fig. 3) sind die Ansätze 10 durch Zudrehen der Einstellmutter 12 der Druckwirkung der Federelemente 11 ausgesetzt, wodurch die Führungselemente 7 bezüglich des Hohlkörpers 6 achsrecht nach außen verschoben werden. Deshalb verschieben sich die Rollen 3 zum Draht 5 und lassen auf ihn die von den Federelementen 11 erzeugte Druckkraft einwirken. Aufgrund des von den Federelementen 11 auf die innere Stirnfläche der Einstellmutter 12 ausgeübten Gegendrucks werden die beweglichen Elemente 7 auch nach außen bezüglich des Körpers 6 achsrecht und die mitgenommenen Rollen 3 nach innen zur Drahtachse 5 verschoben. Dadurch erhält der Draht einen zusätzlichen Anpreßdruck, der den ersten von den Ansätzen 10 aufgebrachten Anpreßdruck verdoppelt. Mit dem Inbetriebsetzen des Motors 1 wird die ganze Vorrichtung gedreht, wobei die Rollen 3 den Draht 5 planetenförmig in Schraubenlinien zu umlaufen beginnen. Wegen der von den Rollen 3 auf den Draht 5 ausgeübten doppeltwirkenden Anpreßkraft, nämlich durch die Ansätze 10 schiebend, durch die Einstellmutter 12 ziehend, entsteht eine Schiebekraft, die den Draht 5 axial antreibt und ihn in die Schweißzone verschiebt. Der Drahtvorschub läuft aufgrund des Ausgleichs der Durchmesserunterschiede und der Ungleichmäßigkeiten des Drahtes 5 durch die Federelemente 11 fließend, wodurch die Rollen 3 auf der Achse des Hohlkörpers 6 pulsierend diesen Abweichungen nachfolgen.

Die Beschickung des Gerätes erfolgt folgendermaßen: Man dreht die beiden Einstellmuttern 12 auf, bis die Federelemente 11 eine solche Entspannung aufweisen, daß beim Zueinanderanpressen der Elemente 7 bzw. Auseinandertreiben der Rollen 3 Draht mit einem vorgesehenen Durchmesser frei durchgeführt werden kann. Nach dem Durchzug des Drahtes 5 durch die Drahtführung der Nabe 16 werden die Einstellmuttern 12 wieder bis zur eingestellten Teilung zugedreht, die dem Wert eines nach dem Durchmesser und nach der Härte des Drahtes 5 abgestuften Anpreßdrucks der Rollen 3 entspricht. Dieser Anpreßdruck wird vonvornherein unter Berücksichtigung des Einstellens der Kraft der Federelemente 11 und der Gewährleistung einer für diesen Fall notwendigen Vorschubkraft ermittelt.

Bei der zweiten Ausführungsform (Fig. 5) schieben die Ansätze 10 beim Zudrehen der Einstellmutter 12 nicht nach außen, sondern nach innen zum Draht 5. Auf diese Weise entsteht im Unterschied zur ersten Ausführungsform nur eine Anpreßkraft (ohne das zusätzliche Ziehen), die direkt und gegensinnig mittels der einseitig gestellten beweglichen Elemente 7 übertragen wird, wobei dadurch beim Inbetriebsetzen des Gerätes durch den Motor 1 die notwendige Drahtvorschubkraft erzeugt wird. Die Art und Weise der Beschickung des Geräts und der Erzielung einer Anpreßkraft, die abgestuft gemäß dem Durchmesser und der Härte des Drahtes 5 durch die Einstellmuttern eingestellt wird, entspricht der ersten Ausführungsform, wobei zum Durchzug des Drahtes 5 zwischen den Rollen 3 nur das Aufdrehen der Mutter 12 genügt, ein Andrücken der Elemente 7 aufeinander zu also nicht notwendig ist.

Bei der dritten Ausführungsform (Fig. 6) erhält der Becher 21 durch Drehen der Mutter 24 eine entsprechende Druckkraft, die die Gabel 17 zum Drahtvorschub achsgerecht verschiebt. Deshalb werden die beweglichen Elemente 7 von den zwischen den schrägen Zahnausschnitten der Zähne 18, 19 geführten Kugeln 20 axial zum Hohlkörper 6 verschoben, wobei die Rollen 3, um einen Freilauf des Drahtes 5 zu ermöglichen, auseinandergedrückt werden. Beim weiteren Aufdrehen der Mutter 24 bis zum Sicherungsblech 25 wird das Federelement 22 bis zu einem im voraus eingestellten Anpreßdruck entspannt, womit über den die Gabel 17 rückführenden Becher 21 die Zähne 18, 19, die Kugeln 20, die Elemente 7 und die Rollen 3, ein nach Härte und Durchmesser des Drahtes 5 abgestufter Anpreßdruck ausgeübt wird.

Bei der vierten Ausführungsform (Fig. 8) entsprechen Wirkung und Beschickung des Gerätes denen der dritten Ausführungsform.

Bei der fünften Ausführungsform (Fig. 9) wird durch das von dem Elektromagneten 26 geschaffene axiale Magnetfeld der Anker 27 axial zur Achse des Drahtes 5 und in Gegenrichtung des Vorschubs angezogen. Zusammen mit dem Anker 27 wird auch der Becher 21 mit der Gabel 17 in Bewegung gesetzt, wobei über die Zähne 18, 19, die Kugeln 20, die Elemente 7 und die Rollen 3 auf den Draht 5 ein Anpreßdruck ausgeübt wird. Beim Ausschalten des Elektromagneten 26 kehrt der Anker 27 unter der Wirkung des Federelements 29 in die Richtung des Vorschubs des Drahtes 5 zurück, wobei er aus dem Anpreßdruck der Rollen 3 freikommt. So kann man den Drahtvorschub nur mit Ein- und Ausschalten des Elektromagneten 26 und ohne den Motor 1 außer Betrieb zu setzen unterbrechen, wobei durch Stromänderung des Elektromagneten 26 eine abgestufte Einstellung des Anpreßdrucks der Rollen 3 an den Draht 5 nach Härte und Durchmesser erzielt wird.

Bei der sechsten Ausführungsform (Fig. 10) ist die Wirkung des Geräts der der fünften Ausführungsform gleich.

Bei der siebenten Ausführungsform (Fig. 11 und Fig. 12) wird die Buchse 30 ein Stück gedreht, beispielsweise um ca. 1/4 Umdrehung, wobei ihre exzentrische Flächen mit den Kugeln 31 zusammen die Ansätze 10 verschieben, was ein Auseinandertreiben der Elemente 7 bzw. eine Zueinanderverschiebung der den Draht umfassenden Rollen 3 zur Folge hat. Mit dem Inbetriebsetzen des Motors 1 wird vom tangentialen Feld des Elektromagneten 26 eine Bremswirkung auf den scheibenartigen Teil der Buchse 30 bewirkt, wodurch ein Anpreßdruck auf den Draht 5 ausgeübt wird. Der Anpreßdruck auf den Draht 5 kann nach Härte und Durchmesser durch Änderung der Parameter des Elektromagneten 26 abgestuft werden, wobei das Ein- und Ausschalten des Elektromagnetstromes ein Ab- und Wiedereinschalten des Drahtvorschubs ohne Aussetzen des Motors 1 bewirkt.

Bei der achten Ausführungsform (Fig. 13) wird mit dem Einschalten des Elektromagneten 26 ein radiales Magnetfeld erzeugt, das die Stücke 33 mit den Elementen 7 zusammen anzieht, wobei die zueinandertreibenden Rollen 3 einen von der Größe des Magnetfeldes abhängigen Anpreßdruck auf den Draht ausüben. Mit dem Ein- und Ausschalten des Elektromagneten 26 kann der Drahtvorschub ohne Aussetzen des Motors 1 ab- und wiedereingeschaltet werden. Durch eine Änderung der Parameter des Elektromagneten 26 kann der Anpreßdruck auf den Draht nach Härte und Durchmesser abgestuft werden.

Die Schaltung von Fig. 14 funktioniert in folgender Weise: Der Drehzahlregler 40 hält die Drehzahl des Motors 1 entsprechend einem vorher eingestellten Wert aufrecht. Der Motor 1 dreht sich kontinuierlich. Das Ab- und Wiedereinschalten des Drahtvorschubs kommt aus dem Ausgang der Schaltung 25 zur Folgesteuerung mit Hilfe des Freigabeeingangs vom Verstärker 34. Durch die Signaleingabe wird die Wicklung des Elektromagneten 26 vom Strom durchflossen, wobei ein axiales, tangentiales oder bzw. radiales Magnetfeld entsteht. Die Drahtvorschubrollen 3 pressen sich an den Draht und der Drahtvorschub beginnt. Mit Abschalten der Signaleingabe unterbricht der Verstärker 34 die Stromführung zur Wicklung des Elektromagneten 26 und der Drahtvorschub schaltet sich ab. Die Stromstärke in der Wicklung des Elektromagneten 26 wird nach Härte und Durchmesser des Drahtes 5 durch die Schaltung zur Eingabe des Anpreßdrucks 37 abgestuft. Das Eingabesignal wird von der Schaltung 37 an den zweiten Eingang des Addierers 36 von Analogsignalen gegeben. Seinem ersten Eingang wird ein zusätzliches Eingabesignal zugeführt, das vom Vorverstärker 38 kommt und dem Strom des Motors 1 entspricht. Ändert sich der von dem Gerät auf den Draht während der Arbeit ausgeübte Widerstand, wird der Strom des Motors 1 einer Änderung ausgesetzt, was eine entsprechende Änderung des zusätzlichen Eingabesignals zur Folge hat. Deshalb stellt sich der Anpreßdruck der Rollen 3 durch die Änderung des Stromes vom Elektromagneten 26 entsprechend dem Widerstand automatisch ein.

PATENTANSPRÜCHE
===================

1. Drahtvorschubgerät mit frei um ihre Achsen drehbaren, schräg und symmetrisch zum zugeführten Draht angeordneten, in Schraubenlinien den Draht planetar umlaufenden Vorschubrollen, deren Achsen in einem Gehäuse mit Trag- und Führungsfunktionen befestigt sind und mit kraftübertragenden Gliedern, mit Vorrichtungen zum Regeln des Anpreßdruckes der Vorschubrollen an den Draht und mit Drahtführungen, dadurch g e k e n n z e i c h n e t , daß das Gehäuse als Hohlkörper (6) ausgebildet, quer und symmetrisch zu den Berührungspunkten jeder einzelnen Vorschubrolle (3) mit dem zugeführten Draht (5) angeordnet und von den beweglichen Elementen (7) umfaßt ist, die eine gegenseitige Symmetrie zur Achse des Drahtes (5) und eine axiale Beweglichkeit bezüglich der Fläche des Hohlkörpers (6) aufweisen, wobei die Vorschubrollen (3) mit ihren Achsen (4) in den jeweiligen beweglichen Elementen (7) befestigt sind, die mit den Vorrichtungen zum Regeln des Anpreßdrucks der Vorschubrollen (3) an den Draht (5) durch die kraftübertragenden Elemente in Verbindung gesetzt sind.

2. Drahtvorschubgerät nach Anspruch 1, dadurch g e - k e n n z e i c h n e t , daß im Hohlkörper (6) Führungsaussparungen (8) für die Achsen (4) der Vorschubrollen (3) vorgesehen sind.

3. Drahtvorschubgerät nach Anspruch 2, dadurch g e - k e n n z e i c h n e t , daß wenigstens zwei Führungsaussparungen (8) vorgesehen sind, die in Richtung der Achse des Hohlkörpers (6) etwas verlängert sind.

4. Drahtvorschubgerät nach Anspruch 1, dadurch g e - k e n n z e i c h n e t , daß die beweglichen Elemente (7) nach Form und Masse gleich sind und axiale Einschnitte und Klauen (9) aufweisen, die für ein gegenseitiges Ineinanderverschieben ausgebildet sind, wobei die Masse jeder Klaue (9) räumlich auf beiden Seiten der Achse des Drahtes (5) verteilt ist.

5. Drahtvorschubgerät nach Anspruch 1 und 4, dadurch g e k e n n z e i c h n e t , daß die kraftübertragenden Glieder als Ansätze (10) auf den ineinander verschiebbaren Klauen (9) der beweglichen Elemente (7) ausgebildet sind.

6. Drahtvorschubgerät nach Anspruch 1 und 5, dadurch g e k e n n z e i c h n e t , daß jede Vorrichtung zum regelbaren Anpressen der Vorschubrollen (3) an den Draht (5) ein Federelement aufweist, das an den Ansatz (10) des einen beweglichen Elements (7) durch eine auf das andere bewegliche Element (7) aufgeschraubte Einstellmutter andrückt.

7. Drahtvorschubgerät nach Anspruch 1, dadurch g e - k e n n z e i c h n e t , daß die beweglichen Elemente (7) nach Form und Masse gleich sind, wobei die Masse jedes einzelnen Elements auf eine Seite der Achse des zugeführten Drahtes (5) verteilt ist.

8. Drahtvorschubgerät nach Anspruch 1, dadurch g e - k e n n z e i c h n e t , daß die kraftübertragenden Glieder eine Gabel (17) mit zur Achse des Drahtes (5) schrägen Führungsflächen, Rollkörper (20) und einen Becher (21) aufweisen.

9. Drahtvorschubgerät nach Anspruch 1 und 8, dadurch g e k e n n z e i c h n e t , daß die Vorrichtung zum regelbaren Anpressen der Vorschubrollen (3) an den Draht (5) wenigstens ein Federelement (22) aufweist, konzentrisch um die Achse des zugeführten Drahtes (5) angeordnet und durch die kraftübertragenden Glieder kinematisch mit den beweglichen Elementen verbunden ist.

10. Drahtvorschubgerät nach Anspruch 1 und 8, dadurch g e k e n n z e i c h n e t , daß die Vorrichtung zum regelbaren Anpressen der Vorschubrollen (3) an den Draht (5) wenigstens einen axial wirkenden Elektromagneten (26) aufweist, der durch die kraftübertragenden Glieder kinematisch mit den beweglichen Elementen (7) verbunden ist.

11. Drahtvorschubgerät nach Anspruch 1, dadurch g e - k e n n z e i c h n e t , daß die kraftübertragenden Glieder drehbare, exzentrisch zur Achse des Drahtes (5) angeordnete Führungsflächen und Rollkörper (31) sowie eine Buchse (30) aufweisen.

12. Drahtvorschubgerät nach Anspruch 1 und 11, dadurch g e k e n n z e i c h n e t , daß die Vorrichtung zum regelbaren Anpressen der Vorschubrollen (3) an den Draht (5) wenigstens einen Elektromagneten (26) mit tangentialem Magnetfeld aufweist, der durch die kraftübertragenden Glieder kinematisch mit den beweglichen Elementen (7) verbunden ist.

13. Drahtvorschubgerät nach Anspruch 1, dadurch g e - k e n n z e i c h n e t , daß auf den beweglichen Elementen (7) bogenförmige Stücke (33) befestigt und um die Rundführung eines mehrpoligen Elektromagnetstators (26) angeordnet sind, wobei die geometrische Achse zur Achse des zugeführten Drahtes (5) koaxial ist.

14. Drahtvorschubgerät nach Anspruch 10, 12 und 13, dadurch g e k e n n z e i c h n e t , daß der Elektromagnet (26) mit dem Ausgang eines Verstärkers (34) verbunden ist, dessen Freigabeeingang mit dem Ausgang einer Schaltung (35) zur Folgesteuerung und dessen Signaleingang

0045093

mit dem Ausgang eines Analogsignal-Addierers (36) verbunden ist, mit dessen erstem Eingang der Ausgang einer Schaltung (3) zur Eingabe der Anpreßkraft und mit dessen zweitem Eingang der Ausgang eines Vorverstärkers (38) verbunden ist, dessen Eingang mit einem in Reihe zu dem Motor (1) und einem Drehzahlregler (40) geschalteten Strom-Spannungs-Wandler (39) verbunden ist.

15. Drahtvorschubgerät nach Anspruch 14, dadurch g e - k e n n z e i c h n e t , daß der Vorverstärker (38) eine nichtlineare Kennlinie aufweist.

FIG. 1

0045093

FIG.2

FIG.4

FIG. 3

FIG. 5

FIG. 6

FIG. 7

FIG. 8

FIG. 9

FIG. 10

FIG. 11

FIG. 12

FIG. 13

FIG. 14